# EUROPÄISCHE PATENTSCHRIFT

(11) **EP 1 452 413 B1**
(45) Veröffentlichungstag und Bekanntmachung des Hinweises auf die Patenterteilung: **09.07.2008**
(21) Anmeldenummer: 03104409.2
(22) Anmeldetag: 27.11.2003
(51) Int. Cl.: B60S 1/34, B60S 1/32

(54) **Wischvorrichtung**
Wiping Device
Dispositif d'essuyage

(30) Priorität: 28.02.2003 DE 10308781
(43) Veröffentlichungstag der Anmeldung: 01.09.2004
(73) Patentinhaber: ROBERT BOSCH GMBH, 70442 Stuttgart (DE)
(72) Erfinder: Weiler, Michael, 363-9, Chungchongbuk-Do (KR); Zimmer, Joachim, 77880, Sasbach (DE)
(74) Vertreter: Friedmann, Jürgen

(56) Entgegenhaltungen:
- EP-A- 0 210 420
- DE-A- 19 700 180
- US-A- 3 178 751
- US-A- 3 480 986
- US-A- 3 716 888
- US-A- 4 477 940

## Beschreibung

### Stand der Technik

Die Erfindung geht aus von einer Wischvorrichtung nach dem Oberbegriff des Anspruchs 1 (US 3,178,751).

### Vorteile der Erfindung

Die Erfindung geht aus von einer Wischvorrichtung, insbesondere für ein Kraftfahrzeug, die einen Wischarm mit zumindest einem federelastischen Teilbereich umfasst, der eine Wischstange und ein insbesondere mit der Wischstange gelenkfrei verbundenes Befestigungsteil aufweist.

Unter gelenkfrei verbunden soll in diesem Zusammenhang verstanden werden, dass die Wischstange und das Befestigungsteil ohne eine materiell ausgeführte Schwenkachse verbunden sind, um die die Wischstange und das Befestigungsteil relativ zueinander schwenkbar wären. Bauteile, die infolge einer Materialverformung, insbesondere infolge einer elastischen Verformung, eine Relativbewegung zwischen der Wischstange bzw. Teilbereichen der Wischstange und dem Befestigungsteil ermöglichen, sollen in diesem Zusammenhang nicht als Gelenk angesehen werden und sollen insbesondere vom Schutzbereich mit umfasst sein, wie beispielsweise Filmscharniere, federelastische Teilstücke, federelastische Wischstangen usw. Die Wischstange und das Befestigungsteil können dabei einteilig oder mehrteilig ausgeführt sein.

Erfindungsgemäß wird der Wischarm zumindest teilweise als Hohlkörper ausgeführt ist. Mit einem zumindest teilweise als Hohlkörper ausgeführten Wischarm kann eine vorteilhaft hohe Torsionssteifigkeit und eine einfache Formgestaltung erreicht werden, wie insbesondere durch bewährte 3D-Biegemaschinen und durch Innenhochdruckverfahren. Durch die erreichbare hohe Torsionssteifigkeit kann eine Veränderung eines Anstellwinkels eines Wischblatts während des Betriebs und ein dadurch bedingtes Rattern zumindest weitgehend vermieden werden. Zudem kann ein kostengünstiger, beispielsweise von einer Rolle abgetrennter, Grundkörper erreicht werden, aus dem einfach verschiedene Wischarme herstellbar sind.

Erfindungsgemäß wird eine Anbindung des Hohlkörpers an eine Abklappeinheit und an ein Blattfederelement erreicht, und zwar indem ein Blattfederelement, in den Hohlkörper eingesteckt ist. Es kann eine besonders sichere sowie einfach und schnell herstellbare Verbindung zwischen dem Hohlkörper und dem Element der Abklappeinheit bzw. dem Blattfederelement erreicht werden. Der Hohlkörper kann dabei teilweise geschlitzt und/oder auch teilweise mit einem Werkstoff gefüllt ausgeführt sein, beispielsweise zur Beeinflussung seiner Eigenfrequenz und/oder seiner Biegesteifigkeit usw.

Weist der Hohlkörper zwischen seinen Anschlussbereichen, insbesondere an weitere Bauteile, in Längsrichtung unterschiedliche Querschnittsformen auf, kann die Biege- und Torsionssteifigkeit über der Länge des Wischarms variiert und der Wischarm kann besonders vorteilhaft auf seine Funktion eingestellt werden. Zudem können Designvorgaben und strömungstechnischen Vorgaben einfach nachgekommen werden. Anstatt sich in Längsrichtung verändernde Querschnittsformen könnte der Hohlkörper jedoch auch mit einer gleichbleibenden Querschnittsform bzw. mit einem konstanten Querschnitt ausgeführt sein, wodurch ein besonders kostengünstiger Wischarm erzielt werden könnte.

Ist an den Hohlkörper ein Spoiler angeformt, kann ohne zusätzliche Bauteile eine vorteilhafte, strömungsbedingte Auflagekraftverstärkung erreicht werden.

Ferner können zusätzliche Bauteile, Montageaufwand und Kosten eingespart werden, indem der Hohlkörper zumindest einen Teil eines Anschlussbereichs zur Kopplung des Wischarms an ein Wischblatt bildet.

In einer weiteren Ausgestaltung der Erfindung wird vorgeschlagen, dass der Hohlkörper zur Realisierung einer Schränkung um seine Längsachse in sich verdreht ist. Bei verschiedenen Wischarmen mit einem entsprechenden Grundkörper können ohne Werkzeugwechsel einfach unterschiedliche Anstellwinkel eines Wischblatts realisiert werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Wischarm mit einem bügellosen Wischblatt schräg von oben,
- Fig. 2: einen vergrößerten Ausschnitt II des Wischarms aus Fig. 1 in einer Seitenansicht,
- Fig. 3: den Ausschnitt aus Fig. 2 vor der Einführung eines Blattfederelements in eine als Hohlkörper ausgebildete Wischstange,
- Fig. 4: einen vergrößerten Ausschnitt IV aus Fig. 1 in einer Ansicht schräg von der Seite,
- Fig. 5: einen vergrößerten Ausschnitt auf eine Stirnseite des Wischarms aus Fig. 1 mit einer ersten und einer alternativen zweiten Schränkung,
- Fig. 6: einen dem Ausschnitt aus Fig. 4 entsprechenden Ausschnitt mit einem alternativen Wischblatt,
- Fig. 7: einen Ausschnitt eines alternativen Wischarms mit einer von einem Durchzug hergestellten Verbindung,
- Fig. 8: den Ausschnitt aus Fig. 7 vor der Herstellung der Verbindung,
- Fig. 9: einen Ausschnitt eines alternativen Wischarms mit einer von einer Niete hergestellten Verbindung,
- Fig. 10: den Ausschnitt aus Fig. 9 vor der Herstellung der Verbindung,
- Fig. 11: einen Ausschnitt eines alternativen Wischarms mit einem Blattfederelement, das einen Einsteckbereich mit einer gezackten Außenkontur aufweist,
- Fig. 12: einen Ausschnitt eines alternativen Wischarms mit einem gebogenen Haken,
- Fig. 13: einen Ausschnitt eines alternativen Wischarms mit einem durch einen Schneidprozess hergestellten Haken,
- Fig. 14: einen Ausschnitt eines alternativen Wischarms mit einer durch einen Schneidprozess hergestellten Haltekralle,
- Fig. 15: einen alternativen Wischarm mit einem Hohlkörper, der zwischen seinen Anschlussbereichen in Längsrichtung sich unterscheidende Querschnittsformen aufweist,
- Fig. 16: eine Wischstange des Wischarms aus Fig. 15 bei einer Innenhochdruckumformung und
- Fig. 17: einen alternativen Wischarm mit einem an einen Hohlkörper angeformten Spoiler.

### Beschreibung der Ausführungsbeispiele

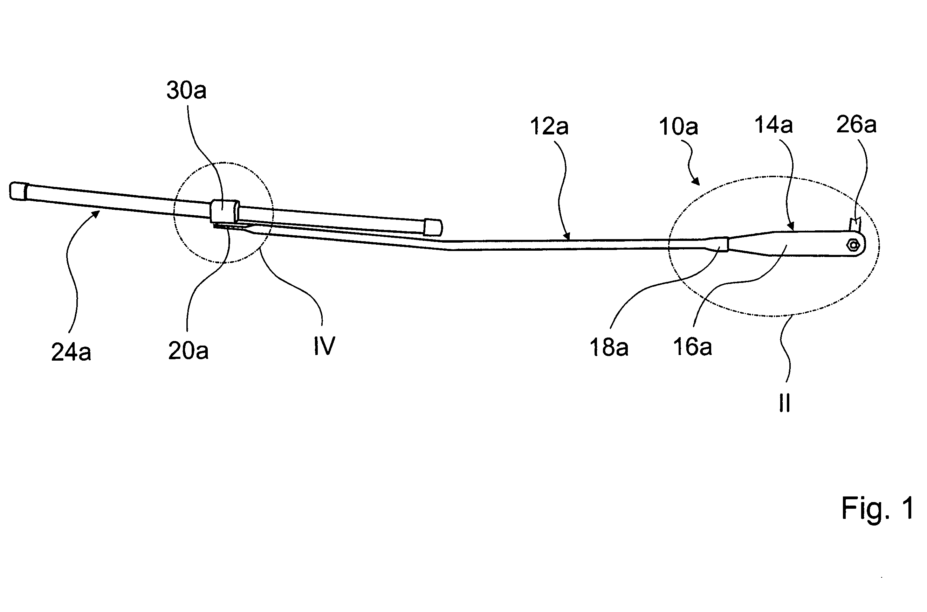

Fig. 1 zeigt eine Wischvorrichtung für ein Kraftfahrzeug, die einen Wischarm 10a umfasst, der eine Wischstange 12a und ein mit der Wischstange 12a gelenkfrei verbundenes Befestigungsteil 14a aufweist, das einen federelastischen Teilbereich des Wischarms 10a bildet. Die Wischstange 12a des Wischarms 10a ist erfindungsgemäß als Hohlkörper ausgeführt bzw. wird von einem Rohr mit einem im Wesentlichen runden Querschnitt gebildet.

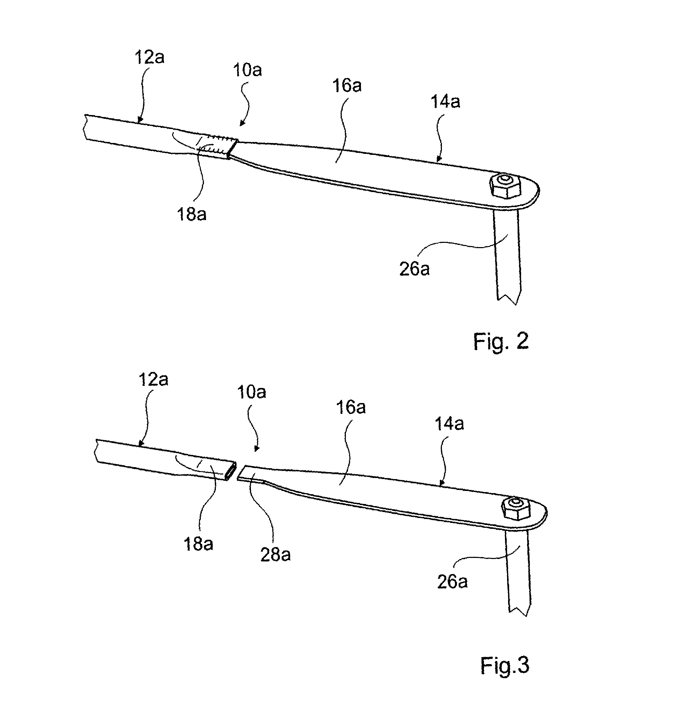

Das von einem Blattfederelement 16a gebildete Befestigungsteil 14a weist an einem ersten Ende eine Durchgangsbohrung zur Befestigung auf einer Antriebswelle 26a eines nicht näher dargestellten Wischermotors auf. Ausgehend von der Durchgangsbohrung in Längsrichtung zur Wischstange 12a weist das eine Abklappeinheit bildende Befestigungsteil 14a ca. kurz nach seiner Längsmitte bis zu einem Einsteckbereich 28a an einem zweiten Ende des Befestigungsteils 14a eine abnehmende Breite auf (Fig. 2 und 3). Der Einsteckbereich 28a weist eine konstante Breite auf, die ca. halb so groß ist wie die Breite im Bereich der Durchgangsbohrung.

Das Befestigungsteil 14a ist mit seinem Einsteckbereich 28a in einen flachgedrückten, ersten Anschlussbereich 18a der Wischstange 12a eingesteckt. Nachdem das Befestigungsteil 14a bei der Montage des Wischarms 10a mit seinem Einsteckbereich 28a in den Anschlussbereich 18a der Wischstange 12a eingesteckt ist, wird die Wischstange 12a im Anschlussbereich 18a verpresst, so dass in Längsrichtung eine kraftschlüssige Verbindung zwischen der Wischstange 12a und dem Befestigungsteil 14a entsteht.

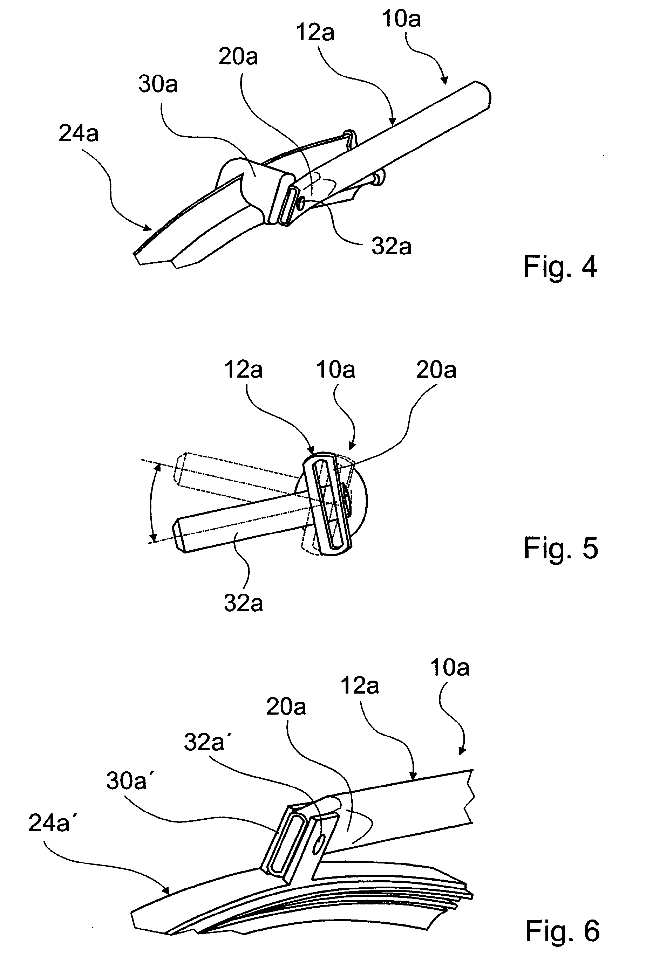

An ihrem freien Ende weist die Wischstange 12a einen flachgedrückten, zweiten Anschlussbereich 20a zur Kopplung des Wischarms 10a an ein bügelloses Wischblatt 24a auf (Fig. 4). Der Anschlussbereich 20a der Wischstange 12a ist im montierten Zustand des Wischblatts 24a seitlich neben einem Befestigungsteil 30a des Wischblatts 24a angeordnet und ist mit diesem über einen Gelenkbolzen 32a verbunden, der in einer Durchgangsbohrung im Anschlussbereich 20a der Wischstange 12a befestigt ist. Anstatt seitlich neben dem Wischblatt 24a ist auch denkbar, dass die Wischstange 12a an einer Deckseite eines Wischblatts 24a' mit einem Befestigungsteil 30a' desselben gekoppelt ist (Fig. 6).

Die Wischstange 12a ist zur Realisierung einer Schränkung um ihre Längsachse in sich verdreht, wobei in Fig. 5 die Wischstange 12a durchgezogen mit einer ersten und gestrichelt mit einer alternativen zweiten Schränkung dargestellt ist.

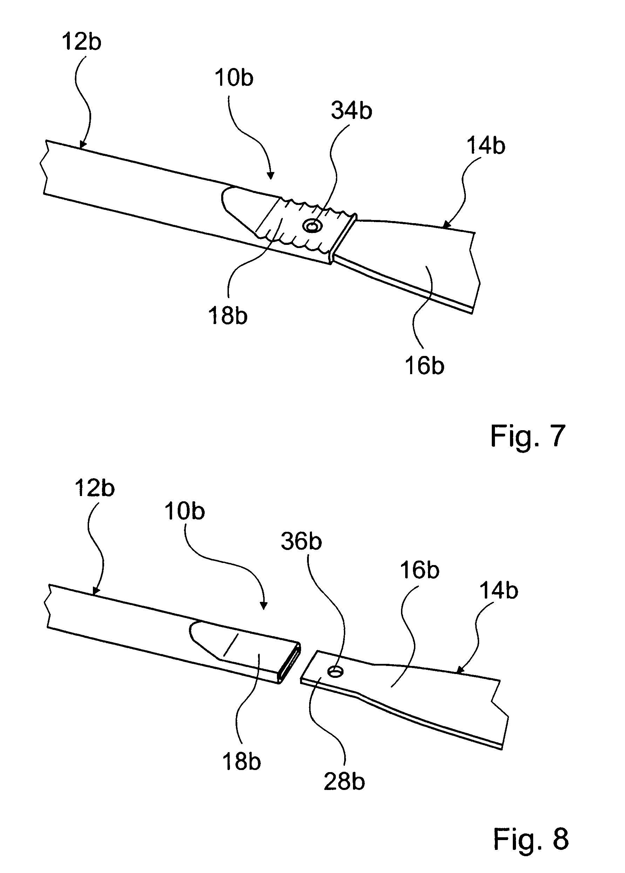

In den Fig. 7 bis 16 sind alternative Ausführungsbeispiele dargestellt. Bei den Ausführungsbeispielen sind in der Beschreibung im Wesentlichen gleiche Bauteile grundsätzlich mit den gleichen Bezugszeichen beziffert, wobei zur Unterscheidung der Ausführungsbeispiele die Buchstaben "a - i" hinzugefügt sind. Ferner kann bezüglich gleichbleibender Merkmale und Funktionen auf die Beschreibung zum Ausführungsbeispiel in den Fig. 1 bis 6 verwiesen werden. Die nachfolgende Beschreibung beschränkt sich im Wesentlichen auf die Unterschiede zum Ausführungsbeispiel in den Fig. 1 bis 6.

Bei dem Ausführungsbeispiel in Fig. 7 und 8 sind eine als Hohlkörper ausgeführte Wischstange 12b und ein von einem Blattfederelement 16b gebildetes Befestigungsteil 14b eines Wischarms 10b zusätzlich zu einem Kraftschluss in Längsrichtung über einen von einem Durchzug 34b gebildeten Formschluss verbunden. Das Befestigungsteil 14b weist in seinem Einsteckbereich 28b eine Durchgangsbohrung 36b auf, in die nach dem Einstecken des Einsteckbereichs 28b in einen flachgedrückten Anschlussbereich 18b der Wischstange 12b bei der Montage des Wischarms 10b Material der Wischstange 12b beim Herstellen des Durchzugs 34b gedrückt wird.

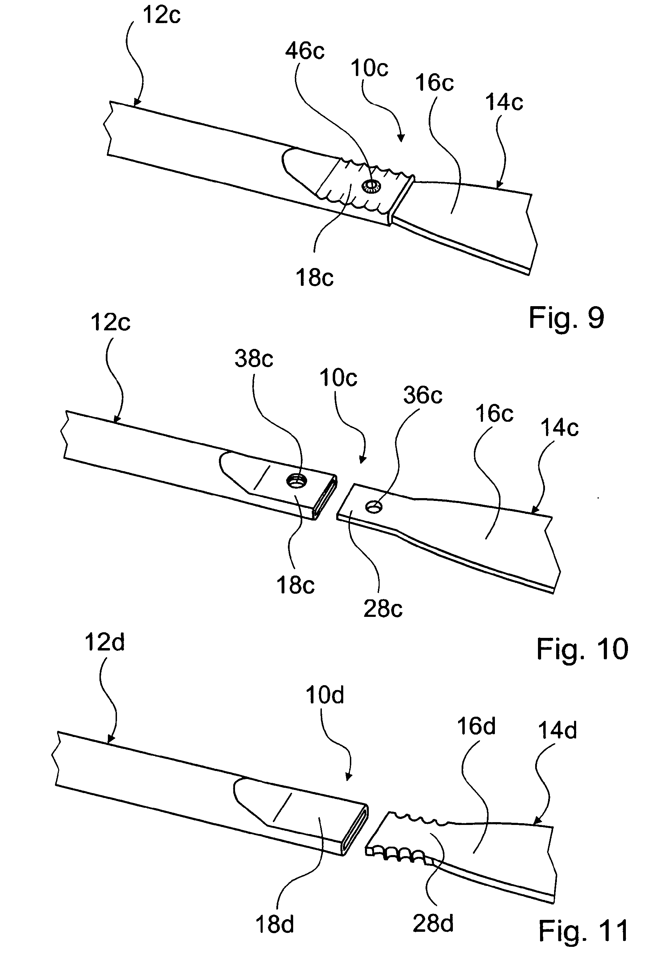

Bei dem Ausführungsbeispiel in Fig. 9 und 10 sind eine als Hohlkörper ausgeführte Wischstange 12c und ein von einem Blattfederelement 16c gebildetes Befestigungsteil 14c eines Wischarms 10c anstatt zusätzlich über einen Durchzug 34b über eine Niete 46c formschlüssig in Längsrichtung verbunden. Hierfür ist zusätzlich zu einer Durchgangsbohrung 36c in einem Einsteckbereich 28c des Befestigungsteils 14c eine Durchgangsbohrung 38c in einen Anschlussbereich 18c der Wischstange 12c eingebracht.

Bei dem Ausführungsbeispiel in Fig. 11 sind eine als Hohlkörper ausgeführte Wischstange 12d und ein von einem Blattfederelement 16d gebildetes Befestigungsteil 14d eines Wischarms 10d über eine gezackte Außenkontur eines Einsteckbereichs 28d des Befestigungsteils 14d formschlüssig in Längsrichtung verbunden. Nach dem Einstecken des Einsteckbereichs 28d in einen flachgedrückten Anschlussbereich 18d der Wischstange 12d bei der Montage des Wischarms 10d wird beim Verpressen des Anschlussbereichs 18d Material der Wischstange 12d in die gezackte Außenkontur des Einsteckbereichs 28d gedrückt. Anstatt den dargestellten Verbindungen sind auch andere, dem Fachmann als sinnvoll erscheinende formschlüssige, kraftschlüssige und/oder stoffschlüssige Verbindungen denkbar, wie beispielsweise Schweißverbindungen, Lötverbindungen, Klebeverbindungen, Schraubverbindungen usw.

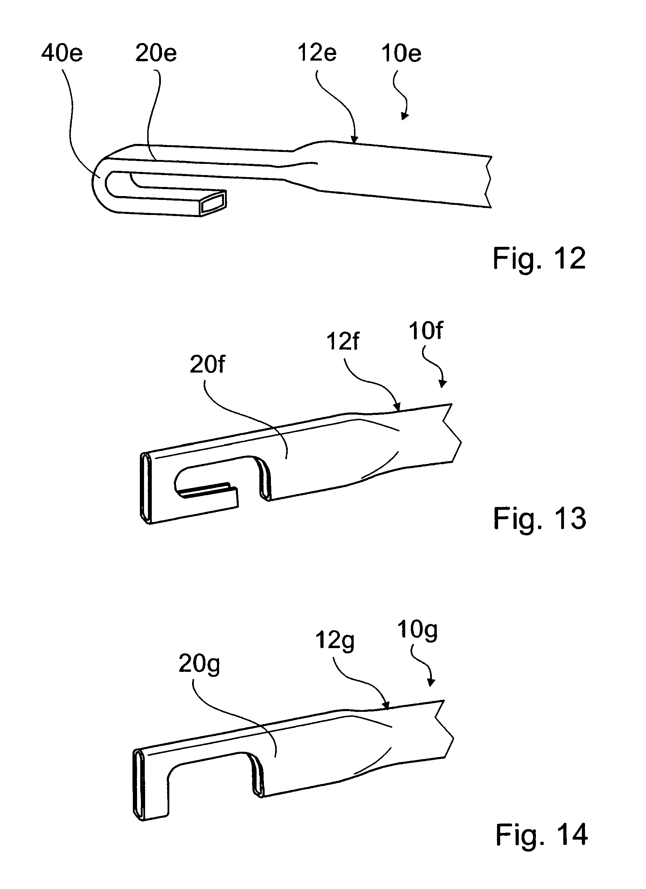

Bei dem Ausführungsbeispiel in Fig. 12 ist ein Ausschnitt einer als Hohlkörper ausgeführten Wischstange 12e eines Wischarms 10e dargestellt, deren freies Ende bzw. deren Anschlussbereich 20e zur Kopplung an ein Wischblatt flachgedrückt und durch eine 180°-Umlenkung 40e zu einem Haken gebogen ist.

Bei dem Ausführungsbeispiel in Fig. 13 ist ein Ausschnitt einer als Hohlkörper ausgeführten Wischstange 12f eines Wischarms 10f dargestellt, deren freies Ende bzw. deren Anschlussbereich 20f zur Kopplung an ein Wischblatt flachgedrückt und durch einen Schneidvorgang zu einem Haken ausgebildet ist.

Bei dem Ausführungsbeispiel in Fig. 14 ist anstatt einer L-förmigen Ausnehmung eine im Wesentlichen rechteckige Ausnehmung in einen Anschlussbereich 20g einer Wischstange 12g eines Wischarms 10g zur Ausbildung einer Haltekralle eingebracht.

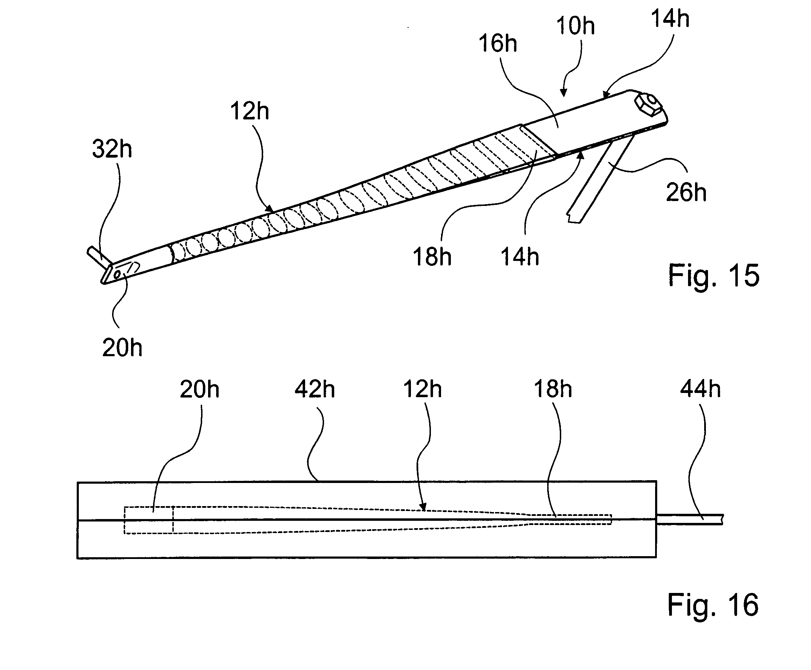

In Fig. 15 ist ein Wischarm 10h dargestellt, der eine als Hohlkörper ausgeführte Wischstange 12h und ein von einem Blattfederelement 16h gebildetes und in die Wischstange 12h eingestecktes Befestigungsteil 14h aufweist.

Die Wischstange 12h ist durch ein Innenhochdruckverfahren umgeformt. Hierfür wird diese in ein Formbauteil 42h eingelegt und über einen Anschluss 44h mit Hochdruck beaufschlagt (Fig. 16). Die Wischstange 12h erhält dadurch zwischen ihren Anschlussbereichen 18h, 20h in Längsrichtung unterschiedliche Querschnittsformen. Die Wischstange 12h weist an ihrem zum Befestigungsteil 14h weisenden Ende eine im Wesentlichen rechteckige, flache Querschnittsfläche auf, die in Längsrichtung zum freien Ende der Wischstange 12h in eine elliptische und anschließend in eine runde Querschnittsfläche übergeht, wobei die Höhe der Wischstange 12h ausgehend von ihrem zum Befestigungsteil 14h weisenden Ende in Richtung zu ihrem freien Ende zunimmt.

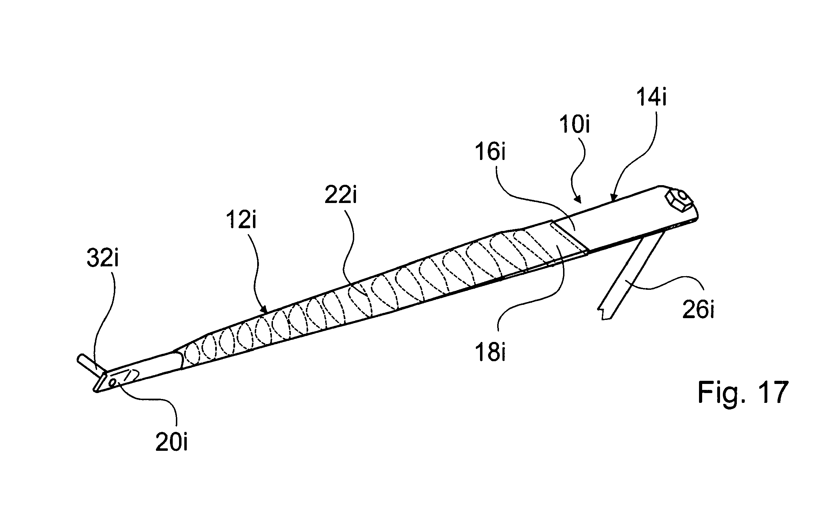

In Fig. 17 ist ein Wischarm 10i dargestellt, der eine als Hohlkörper ausgeführte Wischstange 12i und ein von einem Blattfederelement 16i gebildetes und in die Wischstange 12i eingestecktes Befestigungsteil 14i aufweist.

Die Wischstange 12i ist wie die Wischstange 12h durch ein Innenhochdruckverfahren umgeformt und weist zwischen ihren Anschlussbereichen 18i, 20i in Längsrichtung unterschiedliche Querschnittsformen auf. Die Wischstange 12h weist an ihrem zum Befestigungsteil 14i weisenden Ende eine im Wesentlichen rechteckige, flache Querschnittsfläche auf, die in Längsrichtung zum freien Ende der Wischstange 12i in eine im Wesentlichen keilförmige Querschnittsfläche übergeht, deren Keilwinkel sowie deren Höhe in Richtung zum freien Ende zu- und deren Breite abnimmt. An die Wischstange 12i ist damit ein Spoiler 22i zur Erreichung einer strömungsbedingten Auflagekraft angeformt.

### Bezugszeichen

- 10: Wischarm
- 12: Wischstange
- 14: Befestigungsteil
- 16: Blattfederelement
- 18: Anschlussbereich
- 20: Anschlussbereich
- 22: Spoiler
- 24: Wischblatt
- 26: Antriebswelle
- 28: Einsteckbereich
- 30: Befestigungsteil
- 32: Gelenkbolzen
- 34: Durchzug
- 36: Durchgangsbohrung
- 38: Durchgangsbohrung
- 40: 180°-Umlenkung
- 42: Formbauteil
- 44: Anschluss
- 46: Niete

## Patentansprüche

1. Wischvorrichtung, insbesondere für ein Kraftfahrzeug, die einen Wischarm (**10a** - **10i)** mit zumindest einem federelastischen Teilbereich umfasst, der eine Wischstange **(12a - 12i)** und ein mit der Wischstange (**12a** - **12i)** gelenkfrei verbundenes Befestigungsteil (**14a - 14i**) aufweist, wobei der Wischarm **(10a** - **10i)** zumindest teilweise als Hohlkörper ausgeführt ist und ein Element einer Abklappeinheit in den Hohlkörper eingesteckt ist, **dadurch gekennzeichnet, dass** das in den Hohlkörper eingesteckte Element von einem Blattfederelement (**16a** - **16i**) gebildet ist, das ein einem ersten Ende eine Durchgangsbohrung zur Befestigung auf einer Antriebswelle (**26a**) aufweist.

2. Wischvorrichtung nach einem der vorhergehenden Ansprüche, **dadurch gekennzeichnet, dass** der Hohlkörper zwischen seinen Anschlussbereichen **(18h, 18i, 20h, 20i)** in Längsrichtung unterschiedliche Querschnittsformen aufweist.

3. Wischvorrichtung nach einem der vorhergehenden Ansprüche, **dadurch gekennzeichnet, dass** der Hohlkörper durch ein Innenhochdruckverfahren umgeformt ist.

4. Wischvorrichtung nach einem der vorhergehenden Ansprüche, **dadurch gekennzeichnet, dass** an den Hohlkörper ein Spoiler **(22i)** angeformt ist.

5. Wischvorrichtung nach einem der vorhergehenden Ansprüche, **dadurch gekennzeichnet, dass** der Hohlkörper zumindest einen Teil eines Anschlussbereichs **(20a - 20i)** zur Kopplung des Wischarms **(10a - 10i)** an ein Wischblatt **(24a, 24a')** bildet.

6. Wischvorrichtung nach einem der vorhergehenden Ansprüche, **dadurch gekennzeichnet, dass** der Hohlkörper zur Realisierung einer Schränkung um seine Längsachse in sich verdreht ist.

## Claims

1. Wiping device, in particular for a motor vehicle, which comprises a wiper arm **(10a-10i)** with at least one spring-elastic subregion which has a wiper rod **(12a-12i)** and a fastening part **(14a-14i)** connected in a joint-free manner to the wiper rod **(12a-12i),** wherein the wiper arm **(10a-10i)** is at least partially designed as a hollow body, and an element of a folding-down unit is inserted into the hollow body, **characterized in that** the element which is inserted into the hollow body is formed by a leaf spring element (**16a-16i**) which, at a first end, has a passage bore for fastening to a drive shaft (**26a**).

2. Wiping device according to Claim 1, **characterized in that** the hollow body has different cross-sectional shapes in the longitudinal direction between its connecting regions (**18h, 18i, 20h, 20i**).

3. Wiping device according to one of the preceding claims, **characterized in that** the hollow body is formed by an internal high-pressure process.

4. Wiping device according to one of the preceding claims, **characterized in that** a spoiler (**22i**) is integrally formed on the hollow body.

5. Wiping device according to one of the preceding claims, **characterized in that** the hollow body forms at least part of a connecting region (**20a-20i**) for coupling the wiper arm (**10a-10i**) to a wiper blade (**24a, 24a'**).

6. Wiping device according to one of the preceding claims, **characterized in that** the hollow body is twisted in itself in order to realize an offset about its longitudinal axis.

## Revendications

1. Dispositif d'essuyage, notamment pour un véhicule automobile comprenant un bras d'essuyage (10a-10i) avec au moins une zone partielle élastique comme un ressort, ayant une tige d'essuie-glace (12a-12i) et une pièce de fixation (14a-14i) reliée sans articulation à la tige d'essuie-glace (12a-12i),
le bras d'essuie-glace (10a-10i) étant au moins en partie réalisé sous la forme d'un corps creux et un élément d'une unité de rabattement est engagé dans le corps creux,
**caractérisé en ce que**
l'élément engagé dans le corps creux est formé par un élément de ressort-lame (16a-16i) dont une première extrémité comporte un perçage traversant pour être fixée sur un arbre d'entraînement (26a).

2. Dispositif d'essuyage selon la revendication 1,
**caractérisé en ce que**
le corps creux présente des formes de section variable dans la direction longitudinale entre ses zones de raccordement (18h-18i, 20h, 20i).

3. Dispositif d'essuyage selon l'une des revendications précédentes,
**caractérisé en ce que**
le corps creux est mis en forme par un procédé appliquant une haute pression intérieure.

4. Dispositif d'essuyage selon l'une des revendications précédentes,
**caractérisé en ce que**
le corps creux est en forme de déflecteur (22i).

5. Dispositif d'essuyage selon l'une des revendications précédentes,
**caractérisé en ce que**
le corps creux forme au moins une partie d'une zone de raccordement (20a-20i) pour coupler le bras d'essuie-glace (10a-10i) à un balai d'essuie-glace (24a, 24a').

6. Dispositif d'essuyage selon l'une des revendications précédentes,
**caractérisé en ce que**
le corps creux est tourné autour de son axe pour former une partie rétrécie.
